# EUROPÄISCHE PATENTANMELDUNG

(11) **EP 0 686 455 A1**
(43) Veröffentlichungstag der Anmeldung: **13.12.1995**
(21) Anmeldenummer: 95107095.2
(22) Anmeldetag: 11.05.1995
(51) Int. Cl.: B23K 20/12

(54) **Verfahren zur Verbindung zwischen einer Elektrode für elektrolytische Zwecke und einem Stromzuführungsbolzen und Verbindingsanordnung**

(30) Priorität: 06.06.1994 DE 4419459
(71) Anmelder: HERAEUS ELEKTROCHEMIE GMBH, D-63450 Hanau (DE)
(72) Erfinder: Dehm, Gerhard, D-63579 Freigericht (DE)
(74) Vertreter: Kühn, Hans-Christian

(57) **Zusammenfassung**

Zur elektrischen und mechanischen Verbindung zwischen dem Ende eines Stromzuführungs- bzw. Befestigungsbolzens und dem stirnseitigen Ende eines Stromzuleiters für eine Elektrode für elektrochemische Zwecke, insbesondere Stromzuleiter für Elektroden für Diaphragma- oder Membran-Elektrolysezellen, wobei der Stromzuleiter einen Kern aus elektrisch gut leitendem Werkstoff aufweist und von einem Ventilmetall-Mantel zwecks Korrosionsschutz umgeben ist, werden beide Enden unter gegenseitiger Berührung mittels Reibschweißung verbunden.

## Beschreibung

Die Erfindung betrifft ein Verfahren zur elektrischen und mechanischen Verbindung zwischen dem stirnseitigen Ende eines Stromzuleiters für eine Elektrode für elektrochemische Zwecke, insbesondere Stromzuleiter für eine Anode für Diaphragma- oder Membran-Elektrolyse-Zellen, und dem stirnseitigen Ende eines Stromzuführungsbolzens, wobei der Stromzuleiter einen Kern aus elektrisch gut leitenden Werkstoff aufweist, der von einem Mantel aus Ventilmetall umgeben ist, wobei die Enden mittels relativer Rotation durch ein Reibschweißverfahren miteinander verbunden werden, sowie eine Verbindungsanordnung zwischen Elektrode und Stromzuführungsbolzen.

In Elektrolyseanlagen werden vorwiegend Ventilmetalle, wie beispielsweise Titan oder Tantal, für Elektroden, Stromzuführung und Stromverteilung eingesetzt. Da Ventilmetalle hohe spezifische elektrische Leitwerte besitzen, sind Überbrückungen von längeren Distanzen mit einem hohen Spannungsabfall, d.h. mit Verlusten verbunden. Aus diesem Grunde kommen Verbundmaterialien immer mehr zum Einsatz, die im Inneren einen elektrisch gut leitenden Werkstoff aufweisen, während ihre Oberfläche zum Schutz vor Korrosion aus Ventilmetall besteht.

Insbesondere für Befestigungselemente im Bereich von außerhalb der Elektrolysezelle liegenden Kontakten werden häufig hochfeste Materialien vermißt, die mechanisch dauerhaft, aber dennoch beliebig oft lösbar sind und gleichzeitig eine sehr gute spezifische elektrische Leitfähigkeit besitzen, sowie zusätzlich eine schweißtechnische- oder löttechnische Verbindung mit den verwendeten Ventilmetallen eingehen können.

Aus der DE-OS 23 57 550 ist der Einsatz des Reibschweißverfahrens für die Verbindung von anolyt- bzw. katholyt-beständigen Stromleiterverbindungsstücken für bipolare Elektroden in Diaphragmazellen bekannt. Als problematisch erweist sich aufgrund der bipolaren Elektrodenstruktur die verhältnismäßig komplizierte Gestaltung der Stromzuführungen und Elektrodenstruktur.

Die Erfindung stellt sich die Aufgabe, möglichst einfache Verbindungen zwischen Elektroden in Elektrolysezellen und Stromzuleitern bei Neuanfertigungen und Reparaturen zu erstellen; insbesondere sollen Befestigungsbolzen mit Anoden in Diaphragmazellen auf möglichst einfache Weise verbunden werden, wobei der als Korrosionsschutz dienende Titan-Mantel ohne Risse den Kern des Stromzuleiters dicht umschließen soll. Weiterhin sollen Bauteilformen unterschiedlicher Geometrien, wie Rechteck und Querschnitte der Enden von Befestigungsbolzen und Stromzuleiter miteinander verbunden werden können.

Darüberhinaus soll eine vom Durchmesser des Leiters abhängige Drehzahl auswählbar sein.

Die Aufgabe wird verfahrensgemäß durch die kennzeichnenden Merkmale des Anspruchs 1 gelöst.

In einer vorteilhaften Ausgestaltung des Verfahrens kann bei stark oxidierenden Teilen auch mit Schutzgas gearbeitet werden.

Als vorteilhaft erweist es sich, daß bedingt durch die niedrige und lokal stark begrenzte Wärmeeinbringung in die Schweißzone es kostengünstig und schnell gelingt, Materialien unterschiedlicher Zusammensetzung reproduzierbar miteinander zu verschweißen.

Weitere vorteilhafte Ausgestaltungen des Verfahrens sind in den Ansprüchen 2 bis 8 angegeben.

Vorteilhafterweise können mit dem Verfahren des Reibschweißens unterschiedliche Werkstoffe für Stromzuleiter und Stromzuführungsbolzen wie Titan mit Stahl, Titan mit leg. Edelstählen, Kupfer mit Titan, Aluminium mit Titan, Stahl mit Kupfer, Stahl mit Aluminium und Keramiken sowie Elektrolyt-Kupfer mit CuAl₂O₃ verbunden werden; die Wärmeeinbringung ist sehr gering, da lokal stark eingegrenzt; zudem besteht die Möglichkeit, die Schweißstelle zu formieren. Die Schweißverbindung ist ganzflächig und erreicht in der Regel eine höhere Festigkeit als das Grundmaterial. Sie ist auch bei kleinen Stückzahlen kostengünstig; eine Nahtvorbereitung ist nicht notwendig. Bei geeigneten Geometrien ist keine Nacharbeit erforderlich, da die Reibschweißmaschine nachgehend als Drehmaschine eingesetzt wird, um den Schweißgrat zu entfernen.

Bei Verbundmaterialien ergibt sich der Vorteil, daß sich durch die geringe Wärmeeinbringung sehr geringe Wärmespannungen aufbauen, die in keinem Fall zu einer Schädigung der Basismaterialien bzw. der Schweißstelle führen. Bei durchgeführten Versuchen mit Verbundmaterialien wurden keine abgelösten Auflagewerkstoffe gefunden.

Durch den aufgebrachten Druck wird das Gefüge im Schweißbereich feinkörnig. Die Folge ist ein sehr guter Stromübergang mit geringen den Basismaterialien entsprechenden spezifischen elektrischen Leitwerten.

Die Festigkeit der Schweißnaht ist vorteilhafterweise am Beispiel CuCr bzw. CuCrZr verschweißt mit Elektrolyt-Kupfer und Rein-Titan mit Rein-Aluminium größer als die der Basismaterialien; ein Abriß erfolgte bei Versuchen stets außerhalb der Schweißnaht.

Die Aufgabe wird vorrichtungsgemäß durch die kennzeichnenden Merkmale des Anspruchs 9 gelöst.

Als vorteilhaft erweist es sich, daß stets flächige Schweißquerschnitte entstehen, wobei das Aufoxidieren von Titan weitestgehend unterbunden wird, so daß hinterher keine Versprödung des Titans entstehen kann.

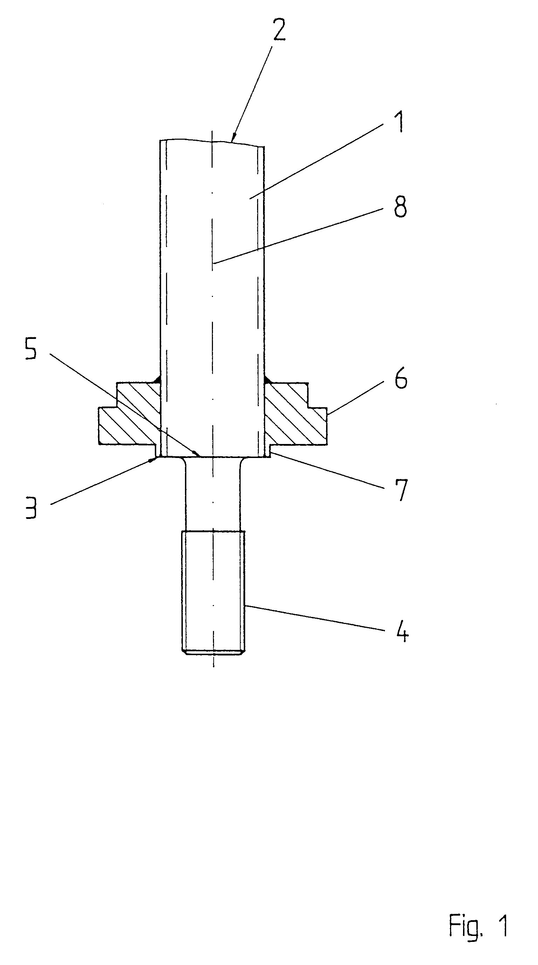

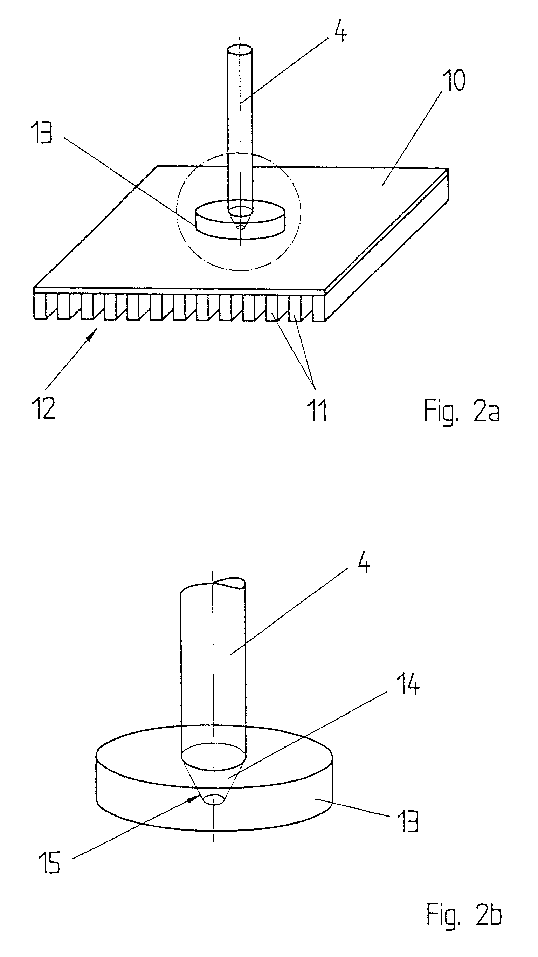

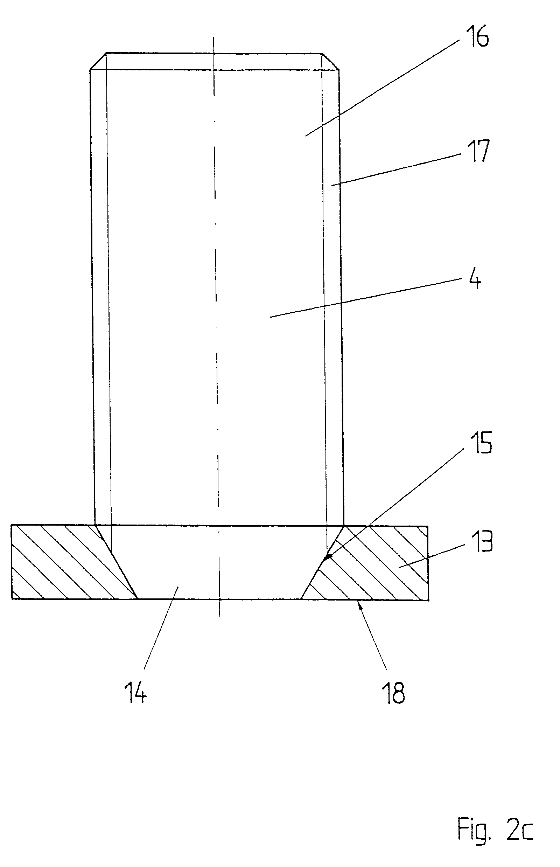

Im folgenden wird der Gegenstand der Erfindung anhand der Figuren 1, 2a, 2b und 2c näher erläutert.
Figur 1 zeigt ausschnittsweise im Längsschnitt einen Stromzuleiter für eine Elektrode, der mittels Reibschweißung mit einem an die Stromversorgung anschließbaren Stromzuführungsbolzen verbunden ist.
Figur 2a zeigt ausschnittsweise in einer perspektivischen Darstellung eine Anodenstruktur mit aufgeschweißter Kontaktronde am Titan, die ihrerseits mit einem Stromzuführungsbolzen aus elektrisch gut leitendem Material durch Reibschweißen verbunden ist;
Figur 2b zeigt im Aussschnitt den Reibschweißverbund nach Figur 2a;
Figur 2c zeigt ausschnittsweise einen Längsschnitt durch den Reibschweißverbund von Stromzuführungsbolzen und Kontaktronde.

Figur 1 zeigt im Längsschnitt einen Stromzuleiter 1, dessen gebrochen dargestelltes Ende 2 mit einer hier nicht näher dargestellten Elektrode verbunden ist; an seinem anderen Ende 3 ist der Stromzuleiter 1 mit dem Verbindungsbereich 5 zum Befestigungsbolzen 4 versehen, wobei dieser Verbindungsbereich 5 durch den erfindungsgemäßen Reibschweißvorgang mittels einer hier nicht dargestellten Reibschweißvorrichtung erzielt wird; der Befestigungsbolzen 4 verbindet die hier zwecks besserer Übersicht nicht dargestellte Stromzuführung aus einem elektrisch gut leitenden Werkstoff mit dem Stromzuleiter 1, wobei Stromzuleiter 1 und Befestigungsbolzen 4 zueinander koaxial angeordnert sind; die gemeinsame Achse ist mit Ziffer 8 bezeichnet. Als Werkstoff für Stromzuleiter 1 dient vorteilhafterweise ein von Titan ummantelter Kupferstab, welcher im Bereich seines Endes 3 von einem Flansch 6 umgeben ist, der vorteilhafterweise aus einer Titan-Palladium-Legierung besteht; Stromzuleiter 1 ist über diesen Flansch 6 hinaus mit einem hochgezogenen Kragen 7 umlaufend versehen; der Kragen 7 besteht ebenfalls vorteilhafterweise aus einer Titan-Palladium-Legierung.

Der eigentliche Reibschweißvorgang erfolgt durch Einspannen von Stromzuleiter 1 in eine hier nicht dargestellte stationäre Halterung, während Befestigungsbolzen 4 in der Spindel einer Reibschweißvorrichtung so eingespannt wird, daß beide Enden sich gegenüberliegen.

In der ersten Phase wird Stromzuführungsbolzen mittels der Spindel auf eine Umdrehungszahl von 800 bis 4000 Umdrehungen gebracht, während einer zweiten Phase wird die Halterung mit Stromzuleiter 1 in axialer Richtung in Richtung Befestigungsbolzen 4 bewegt, um den Reibschweißvorgang einzuleiten; nach Beendigung der zweiten Phase wird in einer dritten Phase die Stauchung vorgenommen, wobei der Stauchungsdruck von der Halterung mittels eingespanntem Stromzuleiter in Richtung Befestigungsbolzen bzw. Spindel ausgeübt wird. Beide Enden werden über Zeitsteuerung und/oder Wegsteuerung gegeneinander gedrückt und entweder in die laufende oder ruhende Spindel mit einem Druck im Bereich von 10 bis 200 bar gestaucht. Es entsteht ein gleichmäßiger Schweißwulst, der gegebenenfalls bei Einsatz eines entsprechenden Drehmeißels in der Maschine abgedreht werden kann. Im Falle eines Befestigungsbolzens auf Kupfer-Basis und eines Kupfer-Kerns des Stromzuleiters 1 liegt die flächenspezifische Stauchkraft der Phase 3 im Bereich von 100 bis 200 ^{N}/mm². Der Durchmesser des Befestigungsbolzens liegt im Bereich von 16 bis 20 mm, vorzugsweise bei 18 mm.

In einer bevorzugten Ausführungsform des Verfahrens wurde eine Reibschweißmaschine des Typs RS 45 E der Firma KUKA Schweißanlagen & Roboter GmbH ausgewählt.

Mit dieser Maschine können Querschnitte zwischen 170 und 2500 mm² reibgeschweißt werden, das entspricht für Vollquerschnitte dem Durchmesserbereich von 15...60 mm. Spannbar sind spindelseitig Durchmesser von 8 mm bis 61 mm bei Bauteillängen zwischen 60 und 340 mm sowie flanschartige Teile bis zu einem Durchmesser von 200 mm bei Flanschdicken bis ca. 50 mm. Auf der Seite des Zentrumsspanners können Durchmesser zwischen 15 und 80 mm bei Bauteillängen von 40 bis 820 mm gespannt werden.

Die Reibschweißmaschine ist mit einer Abdreheinrichtung ausgerüstet, welche das Entfernen des Reibschweißwulstes in der Reibschweißmaschine ermöglicht. Durch die in die Reibschweißmaschine integrierte Parameterüberwachungseinrichtung ist es möglich, die Einhaltung der wichtigsten Reibschweißparameter zu überwachen und somit einen Beitrag zur Qualitätssicherung im ablaufenden Prozeß zu leisten. Darüber hinaus können alle diese Parameter durch ein Druckerprotokoll belegt werden.

Mit dieser Maschine ist darüberhinaus das kombinierte Reibschweißen (Stauchen in drehende Spindel entsprechend dem Schwungradprinzip) möglich. Dadurch können selbst kritische Werkstoffkombinationen mit ausgezeichneten Festigkeitseigenschaften reibgeschweißt werden.

Gemäß Figur 2a ist die Oberseite der Stromverteilung 10 einer mit aktivierten, lamellenartigen Elektrodenelemen- ten 11 im Bereich ihrer Unterseite versehenen Anode 12 für die Quecksilber-Chloralkalielektrolyse mit einer aufgeschweißten Kontaktronde 13 aus Titan bzw. Titanlegierung versehen, die mit einem Stromzuführungsbolzen 4 durch Reibschweißung elektrisch und mechanisch fest verbunden ist.

Gemäß Figur 2b ist die zylindrisch ausgebildete Kontaktronde 13 mit dem in einer hohlkegelförmigen Ausnehmung mittels Reibschweißung fest eingebundenen Stromzuführungsbolzen 4 erkennbar, der mit seiner kegelstumpfförmigen Spitze 14 in die Rondenausnehmung 15 ragt.

Anhand des Längsschnitts in Figur 2c ist die zwischen Ausnehmung 15 der Kontaktronde und Spitze 14 der Stromzuführung entstandene Reibschweißzone erkennbar; der Stromzuführungsbolzen 4 besteht aus einer Elektrolyt-Kupferseele 16, alternativ aus Aluminium oder einem elektrisch gut leitendem Material, die von einer korrosionsbeständigen Titan-Ummantelung 17 umgeben ist. Die Kontaktronde 13 ist an ihrer Unterseite 18 mit einem hier nicht dargestellten Stromverteilung für die Anode verbunden.

Als günstige Schweißparameter für eine Verschweißung von CuCrZr mit Elektrolytkupfer wurden ermittelt:

| | |
|---|---|
| Reibdruck | 37 bis 74 bar |
| Reibkraft | 12 bis 23,5 KN |
| Flächenspez. Reibkraff | 50 bis 100 ^{N}/mm² |
| Anreibzeit | 0,1 s |
| Reibzeit | 0,1 s |
| Reibweg | 2 bis 10 mm |
| Stauchdrehzahl | 0,1 bis 0,3 min⁻¹ |
| Stauchdruck | 75 bis 150 bar |
| Stauchkraft | 24 bis 45 KN |
| Flächenspez. Stauchkraft | 100 bis 200 ^{N}/mm² |
| Stauchzeit | 2 s |
| Abrieb | 1,9 bis 12 mm |
| erreichte Festigkeit im Zugversuch mind. | 256 ^{N}/mm² |
| entspricht | 65 000 N |
| max: | 493 ^{N}/mm² |
| entspricht | 116,7 KN |

## Patentansprüche

1. Verfahren zur elektrischen und mechanischen Verbindung zwischen dem stirnseitigen Ende eines Stromzuleiters für eine Elektrode für elektrochemische Zwecke, insbesondere Stromzuleiter für eine Anode für Diaphragma- oder Membran-Elektrolyse-Zellen, und dem stirnseitigen Ende eines Stromzuführungsbolzens, wobei der Stromzuleiter einen Kern aus elektrisch gut leitenden Werkstoff aufweist, der von einem Mantel aus Ventilmetall umgeben ist, wobei die Enden mittels relativer Rotation durch ein Reibschweißverfahren miteinander verbunden werden, dadurch gekennzeichnet, daß in einer ersten Phase eine relative Rotation zwischen den sich gegenüberliegenden Enden erfolgt, daß in einer zweiten Phase unter relativer Rotation beide Enden bis zur gegenseitigen Reibung aufeinander zu bewegt werden und in einer dritten Phase beide Enden gegeneinander gestaucht werden.

2. Verfahren nach Anspruch 1, dadurch gekennzeichnet, daß beide Enden in der dritten Phase während der relativen Rotation gegeneinander gestaucht werden.

3. Verfahren nach Anspruch 1 oder 2, dadurch gekennzeichnet, daß die Rotation zwischen den Enden von Stromzuführungsbolzen und Stromzuleiter mit einer Drehzahl von wenigstens 800 Umdrehungen pro Minute erfolgt.

4. Verfahren nach einem der Ansprüche 1 bis 3, dadurch gekennzeichnet, daß die Rotation zwischen den Enden von Stromzuführungsbolzen und Stromzuleiter mit einer Drehzahl von höchstens 4000 Umdrehungen pro Minute erfolgt.

5. Verfahren nach einem der Ansprüche 1 bis 4, dadurch gekennzeichnet, daß die Enden von Stromzuführungsbolzen und Stromzuleiter mit einer Reibkraft im Bereich von 10 bis 100 ^{N}/mm² und einer Stauchkraft von 20 bis 200 ^{N}/mm² gegeneinander gestaucht werden.

6. Verfahren nach einem der Ansprüche 1 bis 6, dadurch gekennzeichnet, daß der Reibschweißvorgang in einem Zeitraum von 0,1 bis 8 Sekunden durchgeführt wird.

7. Verfahren nach einem der Ansprüche 1 bis 7, dadurch gekennzeichnet, daß der Stromzuleiter vor der Rotation in einer stationären Halterung befestigt und der Stromzuführungsbolzen in der Spindel einer Reibschweißvorrichtung eingespannt wird.

8. Verbindungsanordnung zwischen dem stirnseitigen Ende eines Stromzuleiters für eine Elektrode mit Ventilmetall-Oberfläche für elektrolytische Zwecke, insbesondere Stromzuleiter für eine Anode für Diaphragma- oder Membran-Elektrolysezellen, und dem Ende eines Stromzuführungsbolzens, wobei der Stromzuleiter einen Kern aus elektrisch gut eitendem Werkstoff aufweist, der von einem Mantel aus Ventilmetall umgeben ist, dadurch gekennzeichnet, daß die Enden von Stromzuleiter (1) und Stromzuführungsbolzen (4) mittels Reibschweißung und Stauchung miteinander verbunden sind.
